# EUROPÄISCHE PATENTSCHRIFT

(11) **EP 3 571 256 B1**
(45) Veröffentlichungstag und Bekanntmachung des Hinweises auf die Patenterteilung: **30.03.2022**
(21) Anmeldenummer: 18742792.7
(22) Anmeldetag: 18.07.2018
(51) Int. Cl.: C09J 133/04, C09J 4/06

(54) **ADHÄSIV MIT LANGER VERARBEITUNGSZEIT UND STABILER VISKOSITÄT**
ADHESIVE HAVING A LONG PROCESSING TIME AND STABLE VISCOSITY
ADHÉSIF À DURÉE D'EMPLOI PROLONGÉE ET VISCOSITÉ STABLE

(30) Priorität: 19.07.2017 DE 102017116262
(43) Veröffentlichungstag der Anmeldung: 27.11.2019
(73) Patentinhaber: Kulzer GmbH, 63450 Hanau (DE)
(72) Erfinder: RUPPERT, Klaus, 63477 Maintal (DE); HABECK, Yanyan, 64846 Groß-Zimmern (DE)
(74) Vertreter: Bendele, Tanja
(86) Internationale Anmeldenummer: PCT/EP2018/069503
(87) Internationale Veröffentlichungsnummer: WO 2019/016264

(56) Entgegenhaltungen:
- WO-A1-2004/083327
- US-A1- 2008 108 721
- US-A1- 2012 309 864

## Beschreibung

Es wird eine polymerisierbare Klebstoffzusammensetzung zur Verwendung als Adhäsiv enthaltend ein olefinisch-funktionalisiertes Kohlenhydrat, ein polymerisierbares, flüssiges Monomer, und optional mindestens einen Polymerisationsinitiator oder ein Initiatorsystem enthaltende Klebstoffzusammensetzung beschrieben. Die Klebstoffzusammensetzung ist zum Verkleben von Kunststoffkomponenten und gefüllten Kunststoffkomponenten besonders gut geeignet sowie zum Verkleben von künstlichen Zähnen auf Prothesenbasen mit einer ausreichend langen Verarbeitungszeit ausgestattet. Die Viskosität der Klebstoffzusammensetzung kann an die jeweiligen Verarbeitungsbedingungen angepasst werden.

Bekannte Klebstoffzusammensetzungen zum Verkleben von Zähnen auf Prothesenbasen, wie das Produkt CAD/CAM Bond von Wieland Dental, umfassen als Hauptkomponente PMMA (Polymethylmethacrylat) Pulver sowie Methylmethacrylat (MMA). Ein wesentlicher Nachteil der PMMA und MMA Klebstoffe besteht in der sehr kurzen Verarbeitungszeit sowie darin, dass sich die Viskosität der zu einer Paste gemischten Komponenten über die Zeit nach dem Mischen erhöht. Zudem wird für diese Klebstoffzusammensetzungen in der Regel ein Primer bzw. Haftvermittler zur Vorbehandlung der Oberfläche benötigt.

Ein 2-Komponenten Adhäsiv zur Verklebung künstlicher Zähne mit der Prothesenbasis wird durch die WO2014/139932 A1 offenbart. Dieses Adhäsiv basiert auf einer Methylmethacrylat-Komponente mit einem Gehalt an PMMA und einem Peroxid, sowie einer zweiten Methylmethacrylat-Komponente mit einem tertiären Amin.

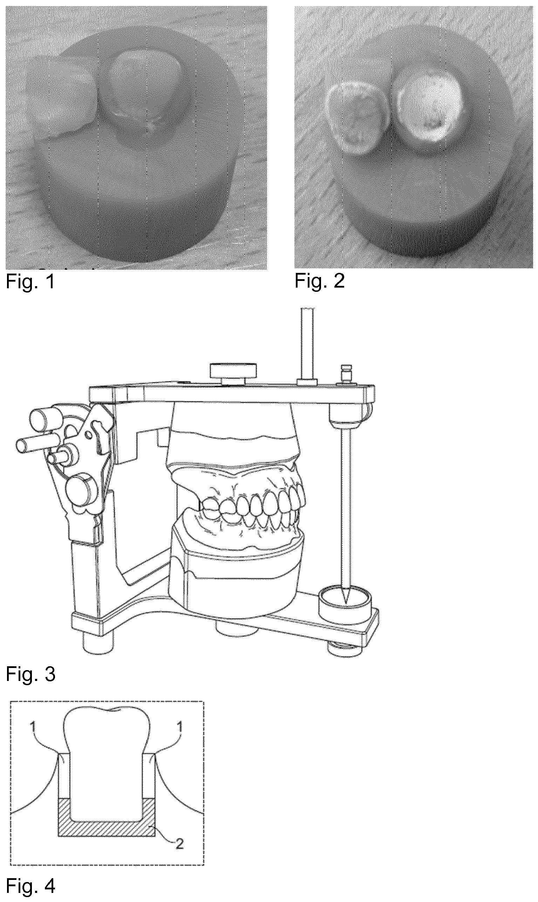

Es besteht daher ein Bedarf an einer Klebstoffzusammensetzung, die ein Verkleben künstlicher Zähne auf einer Prothesenbasis mit ausreichender Festigkeit der Klebeverbindung erlaubt. Vorzugsweise soll die Festigkeit der Klebeverbindung zu einer kohäsiven Fraktur der verklebten Komponenten führen. Des Weiteren besteht ein Bedarf an einer Klebstoffzusammensetzung mit einer langen Verarbeitungszeit und guten Verarbeitungsstabilität, die sich in einer konstanten Viskosität wiederspiegelt. Darüber hinaus soll einerseits eine gute Haftklebrigkeit vor der Polymerisation gegeben sein, um ein Einsetzen der künstlichen Zähne in die Prothesenbasis und deren Okklusion über eine Ausrichtung der Zähne im Artikular zu ermöglichen. Daher bestand einerseits die Anforderung an eine sehr gute Haftklebrigkeit und lange Verarbeitungszeit, um im Artikulator (s. Fig. 3) die noch nicht endgültig fixierten Zähne zur Okklusion ausrichten zu können. Gelöst werden die Aufgaben der Erfindung mit einer Klebstoffzusammensetzung nach Anspruch 1, einem Kit nach Anspruch 15 sowie mit einem Verfahren nach Anspruch 16.

Überraschenderweise ist es gelungen, die gestellten Aufgaben zu lösen, indem eine Klebstoffzusammensetzung umfassend ein polymerisierbares, flüssiges Monomer bereitgestellt wird, vorzugsweise ein radikalisch und/oder photochemisch polymerisierbares, flüssiges Monomer, wie Methacrylsäureethylester (EMA) oder Methacrylsäuremethylester (Methylmethacrylat, MMA), und ein modifiziertes radikalisch polymerisierbares Biopolymer, wie ein olefinisch-funktionalisiertes Kohlenhydrat, bereitgestellt wird. Eine gute Haftklebrigkeit kann bereits mit einer Kombination von Methylmethacrylat und olefinisch-funktionalisierter Cellulose, insbesondere einem Ester- und/oder Ether olefinisch-funktionalisierter Cellulose, insbesondere olefinisch-funktionalisierte Ester, Ether, Carbamate und/oder Amide einer Cellulose, erzielt werden.

Zusammensetzungen mit konventionellen Bindemitteln, wie Polyvinylalkohol oder nicht modifizierter Cellulose, zeigten keine zufriedenstellenden Eigenschaften einer Verklebung, weil entweder der Polyvinylalkohol nicht ausreichend im flüssigen Monomer löslich ist oder die Klebstoffeigenschaften einer Zusammensetzung mit der nicht polymerisierbaren Cellulose unzureichend waren, obwohl die Cellulose im flüssigen Monomer, wie Methylmethacrylat oder Ethylmethacrylat, aufgelöst werden kann. Überraschend konnten mit einer olefinisch-funktionalisierten Cellulose und EMA und/oder MMA ein sehr starker Haftverbund erzielt werden.

Darüber hinaus wurde festgestellt, dass die vorteilhaften Klebeeigenschaften der Klebstoffzusammensetzung erzielt werden können, indem als Monomer Ethylmethacrylat mit mindestens einem olefinisch-funktionalisierten Kohlenhydrat eingesetzt werden. Eine Klebstoffzusammensetzung von olefinisch-funktionalisiertem Kohlenhydrat und Ethylmethacrylat ist nach Mischung der beiden Komponenten deutlich länger verarbeitbar als das getestete Adhäsiv von Wieland Dental, das lediglich eine Verarbeitungszeit von etwa 6 Minuten aufweist, während die erfindungsgemäße Klebstoffzusammensetzung umfassend Ethylmethacrylat und Acrylamidoethylcellulose oder Acrylamidomethylcellulose über 24 Stunden verarbeitbar bleibt.

Ein Nachteil des PMMAs in der Klebstoffzusammensetzung des Standes der Technik ist die starke Quellung des PMMAs im MMA und die damit einhergehende Verkürzung der Verarbeitungszeit. Darüber hinaus ist das aus EMA gebildete PEMA weniger spröde als PMMA. Ein weiterer Vorteil ist der höhere Siedepunkt des Ethylmethacrylates sowie dem entsprechend geringeren Dampfdruck. Insgesamt kann mit der erfindungsgemäßen Klebstoffzusammensetzung eine lagerstabile und lang verarbeitbare, kohäsive Klebstoffzusammensetzung, die eine sehr hohe Bruchfestigkeit aufweist, bereitgestellt werden.

Erfindungsgemäß ist es bevorzugt, das flüssige Monomer und das olefinisch-funktionalisierte Kohlenhydrat und/oder olefinisch-funktionalisierte Kohlenhydrat-Derivat so aufeinander abzustimmen, dass das Kohlenhydrat in dem flüssigen Monomer löslich ist. Als flüssige Monomere gelten alle radikalisch polymerisierbaren olefinischen Verbindungen, die bei Raumtemperatur flüssig sind.

Bevorzugt ist eine Zusammensetzung, in der das Gewichtsverhältnis des mindestens einen polymerisierbaren, flüssigen Monomers oder der flüssigen Monomermischung zum mindestens einen polymerisierbaren olefinisch-funktionalisierten Kohlenhydrat, olefinisch funktionalisiertes Kohlenhydrat-Derivat, insbesondere olefinisch-funktionalisiertes Amid-, Carbamat-, Ester- und/oder Ether eines Kohlenhydrats, oder Gemisch dieser, insbesondere zur olefinisch-funktionalisierten Cellulose, 1 : 10 bis 10 : 1 beträgt, insbesondere 1 : 1 bis 10 : 1, bevorzugt von 2 : 1 bis 5 : 1, besonders bevorzugt 2 : 1 bis 4 : 1, oder etwa 3,2 : 1..

Nach einer bevorzugten Ausführungsform beträgt der Gehalt an Doppelbindungen im olefinisch-funktionalisierten Kohlenhydrat, im olefinisch-funktionalisierten Kohlenhydrat-Derivat oder Gemisch dieser von 0,1 bis 20 Mol-% in Bezug auf 1 Mol Kohlenhydrat, insbesondere 0,1 bis 15 Mol-%, vorzugsweise 1 bis 15 Mol-%, bevorzugt 5 bis 15 Mol-%, besonders bevorzugt 7,5 bis 12,5 Mol-% auf 1 Mol Kohlenhydrat.

Gegenstand der Erfindung ist eine polymerisierbare, mindestens ein Kohlenhydrat enthaltende Klebstoffzusammensetzung, insbesondere eine heiß- und/oder autopolymerisierbare Klebstoffzusammensetzung, bevorzugt eine dentale heiß- und/oder autopolymerisierbare Klebstoffzusammensetzung, umfassend
(i) mindestens ein polymerisierbares, flüssiges Monomer,
(ii) optional mindestens einen Polymerisationsinitiator und/oder ein Initiatorsystem zur Polymerisation umfassend
   1) einen Inititator für die Heiß- oder Autopolymerisation umfassend ein Peroxid und/oder eine Azoverbindung, und optional als Polymerisationsbeschleuniger ein aromatisches tertiäres Amin, oder
   2) ein Redoxsystem umfassend a) ein Peroxid, Diketon und Amin oder b) (i) Barbitursäure oder Thiobarbitursäure oder ein Barbitursäure- oder Thiobarbitursäurederivat und (ii) mindestens ein Kupfersalz oder Kupferkomplex und (iii) mindestens eine Verbindung mit einem ionischen Halogenatom und optional
   3) einen Photoinitiator umfassend α-Hydroxyketon, Azoverbindung oder Acylphosphinoxid, und
(iii) mindestens ein polymerisierbares olefinisch-funktionalisiertes Kohlenhydrat, olefinisch-funktionalisiertes Kohlenhydrat-Derivat oder Gemisch dieser.

Als polymerisierbar gelten im Rahmen der Erfindung photochemisch und/oder radikalisch polymerisierbare Verbindungen. Nach einer Ausführungsform sind autopolymerisierbare, heißpolymerisierbare und/oder photochemisch polymerisierbare Klebstoffzusammensetzungen bevorzugt.

Vorzugsweise umfasst das flüssige Monomer ein Acrylat-Derivat dessen Siedepunkt bei 1 bar größer gleich 110 °C beträgt.

Die Verarbeitungszeit der radikalisch polymerisierbaren und/oder photopolymerisierbaren Klebstoffzusammensetzung beträgt bei 20 bis 23 °C vorzugsweise größer 15 Minuten, insbesondere größer 30 Minuten, bevorzugt größer 1 h, besonders bevorzugt größer 5 h. Die erfindungsgemäße Zusammensetzung weist eine Verarbeitungszeit von circa 24 h bei Raumtemperatur auf.

Nach einer weiteren bevorzugten Ausführungsform ist eine Klebstoffzusammensetzung bevorzugt, die als (iii) ein in (i) lösliches olefinisch-funktionalisiertes Kohlenhydrat, olefinisch-funktionalisiertes Kohlenhydrat-Derivat oder Gemisch dieser umfasst. Bevorzugt sind olefinisch-funktionalisierte Celluloseester, olefinisch-funktionalisierte Celluloseether, olefinische über ein Amid oder ein Carbamat verbrückte Ester und/oder Ether der Cellulose.

Ferner ist eine Klebstoffzusammensetzung bevorzugt, die zwei Komponenten A und B umfasst, wobei
(i) Komponente A als Paste vorliegt und umfasst
   (a1) mindestens ein polymerisierbares, flüssiges Monomer, insbesondere Ethyl(meth)-acrylat (EMA) und/oder Methyl(meth)acrylat (MMA),
   (a2) mindestens ein in (a1) lösliches olefinisch-funktionalisiertes Kohlenhydrat, olefinisch-funktionalisiertes Kohlenhydrat-Derivat oder Gemisch dieser, und,
   (a3) optional mindestens einen Polymerisationsinitiator, insbesondere ein Peroxid; und Komponente B als Paste vorliegt und umfasst
   (b1) mindestens ein polymerisierbares, flüssiges Monomer, insbesondere Ethyl(meth)-acrylat und/oder Methyl(meth)acrylat,
   (b2) mindestens ein in (i), (b1) lösliches olefinisch-funktionalisiertes Kohlenhydrat, olefinisch funktionalisiertes Kohlenhydrat-Derivat oder Gemisch dieser, und
   (b3) optional mindestens einen Polymerisationsbeschleuniger, insbesondere ein tertiäres Amin; oder
(ii) Komponente A als Pulver vorliegt und umfasst
   (a1) mindestens ein pulverförmiges olefinisch-funktionalisiertes Kohlenhydrat, olefinisch funktionalisiertes Kohlenhydrat-Derivat oder Gemisch dieser, und
   (a2) optional mindestens einen Polymerisationsinitiator, insbesondere ein Peroxid; Komponente B als Flüssigkeit oder Paste vorliegt und umfasst
   (b1) mindestens eine polymerisierbares, flüssiges Monomer, insbesondere Ethyl(meth)-acrylat und/oder Methyl(meth)acrylat, und
   (b2) optional mindestens ein in (ii), (a1) lösliches pulverförmiges olefinisch-funktionalisiertes Kohlenhydrat, olefinisch-funktionalisiertes Kohlenhydrat-Derivat oder Gemisch dieser, und
   (b3) optional mindestens einen Polymerisationsbeschleuniger, insbesondere ein tertiäres Amin, und
   die jeweilige Komponente (A) und/oder (B) in (i) und (ii) mindestens einen Polymerisationsinitiator oder ein Initiatorsystem für die radikalische Polymerisation, insbesondere die Heiß- oder Autopolymerisation, und/oder für die Photo-Polymerisation enthält.

Ebenso Gegenstand der Erfindung ist eine polymerisierbare mindestens ein olefinisch-funktionalisiertes Kohlenhydrat enthaltende Klebstoffzusammensetzung, insbesondere eine dentale Klebstoffzusammensetzung, vorzugsweise eine auto-polymerisierbare dentale Klebstoffzusammensetzung, umfassend (i) 60 bis 78 Gew.-% mindestens ein polymerisierbares, flüssiges Monomer, insbesondere umfassend Methylacrylsäuremethylester (MMA) und/oder Methylacrylsäureethylester (EMA) oder eine Mischung enthaltend mindestens eines der beiden Monomere, bevorzugt ist Methylacrylsäureethylester (EMA), (ii) 0 bis 5 Gew.-%, insbesondere 0,0001 bis 5 Gew.-%, insbesondere 0,001 bis 2 Gew.-% mindestens einen Polymerisationsinitiator, insbesondere ein Peroxid, wie (Di)-Benzoylperoxid, und optional einen Polymerisationsbeschleuniger, insbesondere ein aromatisches tertiäres Amin, wie 2-n-Butoxyethyl-4-(dimethyl-amino)-benzoat), und/oder ein Initiatorsystem zur Polymerisation, und (iii) 22 bis 40 Gew.-%, insbesondere 21,999 Gew.-% bis 39,999 Gew.-%, mindestens ein polymerisierbares olefinisch-funktionalisiertes Kohlenhydrat, olefinisch-funktionalisiertes Kohlenhydrat-Derivat oder Gemisch, insbesondere Acrylamidomethylcelluloseacetatbutyrat und/oder Acrylamido-ethylcelluloseacetatbutyrat, dieser umfasst, wobei die Gesamtzusammensetzung 100 Gew.-% umfasst.

Die Klebstoffzusammensetzung kann als eine autopolymerisierbare 2-Komponenten-Klebstoffzusammensetzung, insbesondere eine autopolymerisierbare 2-Komponenten dentale Klebstoffzusammensetzung vorliegen.

Die erfindungsgemäßen flüssigen Monomere können umfassen: a) mindestens ein Acrylat, Acrylsäurealkylester, 2-Alkyl-acrylsäurealkylester, 2-Aryl-acrylsäurealkylester, 2-Arylalkylacrylsäurealkylester, jeweils unabhängig mit 1 bis 20 C-Atomen in der Alkyl-Gruppe, jeweils unabhängig mit 6 bis 14 C-Atomen in der Aryl-Gruppe, jeweils unabhängig mit 6 bis 14 C-Atomen in der Arylalkyl-Gruppe und jeweils unabhängig mit 1 bis 10 C-Atomen in der Alkylester-Gruppe oder einer Mischung umfassend mindestens zwei der genannten Monomere, und/oder
b) N-Alkyl- oder N-Alkenyl substituiertes Acryloyloxy-Carbamat mit einer Molmasse von kleiner gleich 250 g/mol, difunktionelles Urethan(meth)acrylat, wie UDMA, oder auch ein multifunktionelles Urethan(meth)acrylat, wie ein Oligomer oder Dendrimer, und/oder c) di-, tri-, tetra- oder multi-funktionelles Monomer, das kein Urethan(meth)acrylat ist, oder eine Mischung umfassend mindestens zwei der genannten Monomere.

Vorzugsweise umfasst das radikalisch polymerisierbare, flüssige Monomer: Methylmethacrylat, Ethylmethacrylat, Ethylenglycoldimethacrylat, Butandioldimethacrylat, Hexandioldimethacrylat, Triethylenglycoldimethacrylat (TEGDMA), Tetraethylenglycoldimethacrylat, Dirurethandimethacrylat, Bis-GMA (Bis(Hydroxymethacryloyloxypropoxy)phenylpropan, Triemthylolpropantrimethacrylat, Ditrimethylolpropanetetraacrylat, Propylmethacrylat, Butylmethacrylat, n-Hexylmethacrylat, 2-Phenoxyethylmethacrylat, Isobornylmethacrylat, Isodecylmethacrylat, Polypropylen-glykol-mono-methacrylat, Tetrahydrofuryl-methacrylat, Polypropylen-glykol-mono-methacrylat, Methylacrylat, Ethylacrylat, Propylacrylat, Butylacrylat, n-Hexylacrylat, 2-Phenoxyethylacrylat, Isobornylacrylat, Isodecylacrylat, Polypropylen-glykol-mono-acrylat, Tetrahydrofuryl-acrylat, Polypropylenglykol-mono-acrylat, Hydroxyethylacrylat, Hydroxypropylacrylat, Hydroxyethylmethacrylat, Hydroxypropylmethacrylat, eine Mischung enthaltend mindestens eines dieser (Meth-)acrylate.

Das mindestens eine N-Alkyl- oder N-Alkenyl substituiertes Acryloyloxy-Carbamat mit einer Molmasse von kleiner gleich 250 g/mol kann umfassen: ein Monourethan, vorzugsweise C1 bis C6 Alkyl-acryloxyethyl-Carbamat, C1 bis C6 Alkyl-acryloxypropyl-Carbamat, besonders bevorzugt n-butyl acryloxyethyl-Carbamat.

Das mindestens eine difunktionelle oder multifunktionelle Urethan(meth)acrylat kann ausgewählt werden aus einem Urethandimethacrylat, bevorzugt einem Bis(methacryloxy-2-ethoxycarbonylamino)-alkylen, Acryloxy substituiertes Urethan-Dentrimer, Diurethanacrylat Oligomer, Urethan(meth)acrylat Dendrimere, Urethane methacrylate polymer ca. 300 g/mol (Dendrimer, Laromer UA9049, 50% in Acrylat Monomerblend (41,7 Gew.-5% HEMA-TMDI/8, Gew.-% TEGDMA, CAS 109-16-0), Alkyl-funktionelle Urethandimethacrylat Oligomere, Aromatisch-funktionalisierte Urethandimethacrylat Oligomere, aliphatische ungesättigte Urethanacrylate, Bis(methacryloxy-2-ethoxycarbonylamino) substituierter Polyether, aromatische Urethandiacrylat Oligomere, aliphatische Urethandiacrylat Oligomere, monofunktionelle Urethanacrylate, aliphatische Urethandiacrylate, hexafunktionelle aliphatische Urethanharze, aliphatisches Urethantriacrylat, UDMA, aliphatisches Urethanacrylat Oligomer, ungesättigte aliphatische Urethanacrylate. Geeignete Urethan(meth)acrylate sind unter den folgenden Markennamen erhältlich: Ebecryl 230 (aliphatisches Urethandiacrylat), Actilane 9290, Craynor 9200 (Di-Urethanacrylat Ooligomer), Ebecryl 210 (aromatische urethan-diacrylat Oligomere), Ebecryl 270 (aliphatische Urethandiacrylat Oligomer), Actilane 165, Actilane 250, Genomer 1122 (monofunktionelles Urethan-acrylat), Photomer 6210 (cas no. 52404-33-8, aliphatisches Urethan-diacrylat), Photomer 6623 (hexafunctional aliphatic Urethan Resin), Photomer 6891 (aliphatisches urethan-triacrylat), UDMA, Roskydal LS 2258 (Aliphatisches Urethan-acrylat Oligomer), Roskydal XP 2513 (ungesättigtes aliphatisches Urethanacrylat).

Vorzugsweise umfasst das di-, tri-, tetra- oder multi-funktionelles Monomer, das kein Urethan(meth)acrylat ist, oder eine Mischung umfassend mindestens zwei der genannten Monomere: 1,4-Butandiol-dimethacrylat (1,4-BDMA) oder Pentaerythritol-tetraacrylat, Bis-GMA-Monomer (Bisphenyl-A-Glycidyl-Methacrylat), Triethylen-glycoldimethacrylat (TEGDMA) und Diethylenglycoldimethacrylat (DEGMA), Tetraethylen-glykoldi(meth)acrylat, Decandioldi(meth)acrylat, Dodecandioldi(meth)acrylat, Hexyldecan-dioldi(meth)acrylat, Trimethylolpropantri(meth)acrylat, Pentaerythrittetra(meth)-acrylat sowie Butandioldi-(meth)acrylat, Ethylenglycol-di(meth)acrylat, Polyethylenglycol-di(meth)acrylate, ethoxylierte/ propoxylierte Bisphenol-A-di(meth)acrylate eine Mischung enthaltend mindestens eines dieser (Meth-)acrylate und/oder Co-Polymere umfassend eines oder mindestens zwei der vorgenannten Monomere. Als geeignete Alkylmethacrylate für die flüssige Komponente (A) sei auf Methyl-, Ethyl-, n-Propyl, i-Propyl-, n-Butyl, t-Butyl, i-Butyl, Benzyl- und Furfurylmethacrylate oder deren Mischungen verwiesen. Methylmethacrylat ist davon besonders bevorzugt.

Besonders bevorzugt ist das mindestens eine flüssige Monomer ausgewählt aus: Acrylat, Methyl(meth)acrylat (Methacrylsäuremethylester, MMA), Methacrylsäureethylester (EMA), Ethylacrylsäureethylester, insbesondere Methacrylsäureethylester.

Bevorzugte radikalisch und/oder photochemisch polymerisierbare olefinisch-funktionalisierte Kohlenhydrate, olefinisch-funktionalisierte Kohlenhydrat-Derivate oder ein Gemisch dieser umfassen mindestens ein olefinisch-funktionalisierte Di- und/oder Polysaccharid, olefinisch funktionalisierte Di- und/oder Polysaccharide-Derivat, olefinisch funktionalisierte Cellulose, olefinisch funktionalisiertes Cellulose-Derivat, olefinisch funktionalisierte Stärke, olefinisch funktionalisiertes Stärke-Derivat, olefinisch funktionalisiertes Chitin, olefinisch-funktionalisiertes Chitin-Derivat, insbesondere olefinisch-funktionalisierte Ester, Ether, Carbamate und/oder Amide der vorgenannten Kohlenhydrate. Gleichfalls bevorzugt sind olefinische über mindestens ein Heteroatom bifunktionell -O-, -NH- und/oder -S- verbrückte Kohlenhydrate, olefinische über mindestens ein Heteroatom bifunktionell -O-, -NH- und/oder -S- verbrückte Kohlenhydrat-Derivate oder Gemische, wie olefinische bifunktionell -O-, -NH-und/oder -S- verbrückte Di- und/oder Polysaccharide, Di- und/oder Polysaccharide-Derivat, Cellulose, Cellulose-Derivat, Celluloseester, Celluloseether, Stärke, Stärke-Derivat, Chitin, Chitin-Derivat, insbesondere umfassen die Derivate die entsprechenden Alkylester und/oder Alkylether der Kohlenhydrate. Besonders bevorzugt ist eine olefinisch-funktionalisierte Cellulose, ein Cellulose-Derivat oder eine Mischung dieser. Die olefinisch-funktionalisierte Cellulose, wie ein Cellulose-ester und/oder Cellulose-ether, ist vorzugsweise über einen bifunktionell verbrückten -N-, -O- und/oder - S- enthaltenden Rest mit dem olefinischen Rest verbrückt.

Der Gehalt an Doppelbindungen im olefinisch-funktionalisierten Kohlenhydrat, im olefinisch-funktionalisierten Kohlenhydrat-Derivat oder Gemisch dieser, insbesondere in der olefinischen Cellulose, beträgt von 0,1 bis 20 Mol-% in Bezug auf 1 Mol Kohlenhydrat, insbesondere 0,1 bis 15 Mol-%, vorzugsweise 1 bis 15 Mol-%, bevorzugt 5 bis 15 Mol-%, besonders bevorzugt 7,5 bis 12,5 Mol-% auf 1 Mol Kohlenhydrat.

Das Gewichtsverhältnis des (i) mindestens einen polymerisierbaren, flüssigen Monomers oder der flüssigen Monomermischung, insbesondere von EMA und/oder MMA, zum (iii) mindestens einen polymerisierbaren olefinisch-funktionalisierten Kohlenhydrat, olefinisch funktionalisierten Kohlenhydrat-Derivat oder Gemisch, insbesondere der olefinisch-funktionalisierten über einen bifunktionellen Rest O, NH und/oder S mit den Kohlenhydraten verbrückten Kohlenhydrate bzw. Derivaten, beträgt vorzugsweise 1 : 10 bis 10 : 1, insbesondere 1 : 1 bis 10 : 1, bevorzugt von 2 : 1 bis 5 : 1, besonders bevorzugt 2 : 1 bis 4 : 1, oder etwa 3,2 : 1.

Der olefinische Rest der olefinisch-funktionalisierten Kohlenhydrate, den olefinisch funktionalisierten Kohlenhydrat-Derivaten oder Gemische dieser können vorzugsweise ausgewählt sein aus: Alkenyl-Rest, wie Allyl, Vinyl-, Alkenaryl-Rest, ungesättigter Acyl-Rest, wie Fettsäure-Reste bspw. cis-Hexadec-9-ensäure, Acryloyl-Rest, Acryl-Rest, Acrylamido-Rest, Acrylamido-Alkyl-Rest, 2-Alkyl-Acryl-Rest, 2-Alkyl-Acryloyl-Rest, 2-Alkyl-Acryloyl-Alkyl-Rest, wobei die Alkyl-Gruppe 1 bis 10 C-Atomen umfasst, 2-Alkyl-Acrylamido-Rest, wobei die Alkyl-Gruppe 1 bis 10 C-Atome umfasst oder der olefinische Rest kann ausgewählt sein aus: mindestens einen bifunktionell über ein Heteroatom ausgewählt aus - O-, -NH- und -S-Atomen verbrückten Acryl-Rest, 2-Alken-Acryl-Rest, Alkenyl-Rest, Alkenaryl-Rest, ungesättigten Acyl-Rest, insbesondere mindestens einen bifunktionell -O- oder -NHverbrückten Acryl-Rest, 2-Alken-Acryl-Rest, Alkenyl-Rest, Alkenaryl-Rest, ungesättigten Acyl-Rest.

Bevorzugt ist ein Acrylalkenyl-Rest oder ein bifunktionell -O- oder -NH- verbrückter 2-Alkyl-Acryl-Rest, Alkenyl-Rest, wobei die jeweilige Alkyl-Gruppe 1 bis 10 C-Atome umfasst. Beispiele sind (Acryloylalkyl)cellulose-alkylester, (Acrylamidoalkyll)cellulose-alkylester, wobei die jeweilige Alkyl-Gruppe 1 bis 10 C-Atome umfasst, Polyvinyl-funktionalisierte Cellulose, Polyvinyl- funktionalisierte Celluloseester, wobei die Funktionalisierung über vorstehende bifunktionelle Reste erfolgen kann. Besonders bevorzugt sind Acrylamidoethyl-Cellulose, Acrylamidoethyl-Celluloseester, Acrylamido-methyl-Cellulose, Acrylamidomethyl-Cellulose-ester, wobei die Ester mindestens einer Carbonsäure 1 bis 18 C-Atomen aufweisen, bevorzugt sind Acrylamidomethyl-Cellulose-acetatbutyrat oder Acrylamidoethyl-Cellulose-acetatbutyrat.

Besonders bevorzugt sind das olefinisch-funktionalisierte Kohlenhydrat oder olefinisch-funktionalisierte Kohlenhydrat-Derivat ausgewählt aus olefinisch funktionalisiertem Celluloseacetatbutyrat, (Acryloylalkyl)celluloseacetatbutyrat, (Acrylamidoalkyll)cellulose-acetatbutyrat, jeweils unabhängig mit 1 bis 10-C-Atomen in der bifunktionellen Alkyl-Gruppe, insbesondere (Acryloylmethyl)celluloseacetatbutyrat, (Acryloylethyl)celluloseacetatbutyrat, (Acrylamidoethyl)celluloseacetatbutyrat und/oder (Acrylamidomethyl)celluloseacetatbutyrat. Vorzugsweise umfasst das olefinisch-funktionalisierte Kohlenhydrat oder olefinisch-funktionalisierte Kohlenhydrat-Derivat (Acrylamidomethyl)celluloseacetatbutyrat und/oder (Acrylamidoethyl)celluloseacetatbutyrat.

Gemäß einer weiteren bevorzugten Ausführungsform weist das olefinisch-funktionalisierte Kohlenhydrat oder olefinisch-funktionalisierte Kohlenhydrat-Derivat ein Zahlenmittel der Molekulargewichtsverteilung von Mn 1.000 bis 50.000 g/mol auf, insbesondere von 5.000 g/mol bis 40.000 g/mol, vorzugsweise von 10.000 g/mol (GPC), Mn 30.000 g/mol (GPC), jeweils ermittelt mittels GPC.

Olefinisch-funktionalisierte Kohlenhydrat-Derivate umfassen ferner Ether- und/oder Ester von Kohlenhydraten, insbesondere Zuckerether, in denen die nicht glykosidische(n) OH-Guppe(n) verethert sind, Glykoside und Zuckerester. Dabei können die Kohlenhydrate ausgewählt sein aus Monosacchariden, Oligosacchariden, Zuckeralkoholen, Zuckersäuren und Lactonen der Zuckersäuren. Oligosaccharide sind vorzugsweise ausgewählt aus Oligosacchariden die mindestens zwei bis 1.000 Monosaccharide aufweisen, vorzugsweise werden Ether- und/oder Ester der Oligosaccharide mit einem Mn von 2.000 bis 50.000 g/mol, insbesondere mit Mn 4.000 bis 40.000 g/mol eingesetzt.

Nach einer bevorzugten Ausführungsform umfasst die Klebstoffzusammensetzung einen Polymerisationsinitiator, wobei der Initiator umfassen kann:
1) einen Initiator für die Heiß- oder Autopolymerisation umfassend ein Peroxid und/oder eine Azoverbindung, und optional als Polymerisationsbeschleuniger ein aromatisches tertiäres Amin oder
2) ein Redoxsystem umfassend a) ein Peroxid, Diketon und Amin oder b) (i) Barbitursäure oder Thiobarbitursäure oder ein Barbitursäure- oder Thiobarbitursäurederivat und (ii) mindestens ein Kupfersalz oder Kupferkomplex und (iii) mindestens eine Verbindung mit einem ionischen Halogenatom und/oder
3) einen Photoinitiator umfassend α-Hydroxyketon, Azoverbindung oder Acylphosphinoxid.

Die folgenden Initiatoren und/oder Initiatorsysteme für die Auto- oder Kaltpolymerisation umfassen
a) mindestens einen Initiator insbesondere mindestens ein Peroxid und/oder Azoverbindung, insbesondere LPO: Dilauroylperoxid, BPO: Dibenzoylperoxid, t-BPEH: tert.-Butylper-2-ethylhexanoat, AIBN: 2,2'-Azobis-(isobutyronitril), DTBP: Di-tert.-butylperoxid, und optional
b) mindestens einen Polymerisationsbeschleuniger, insbesondere mindestens ein aromatisches Amin, wie 2-n-Butoxyethyl-4-(dimethylamino)benzoat, N,N-Dimethyl-p-toluidin, N,N-Dihydroxyethyl-p-toluidin und/oder p-Dibenzylaminobenzoesäurediethylester oder
c) mindestens ein Initiatorsystem ausgewählt aus Redoxsystemen, insbesondere eine Kombination ausgewählt aus 1) Dibenzoylperoxid und/oder Dilauroylperoxid und Campherchinon mit Aminen ausgewählt aus 2-n-Butoxyethyl-4-(dimethylamino)benzoat, N,N-Dimethyl-p-toluidin, N-N-Dihydroxyethyl-p-toluidin und p-Dimethylaminobenzoesäurediethylester oder
   2) ein Redoxsystem umfassend ein Peroxid, und ein Reduktionsmittel ausgewählt aus Ascorbinsäure, Ascorbinsäurederivat, Barbitursäure oder ein Barbitursäurederivat, Sulfinsäure, Sulfinsäurederviat, besonders bevorzugt ist ein Redoxsystem umfassend (i) Barbitursäure oder Thiobarbitursäure oder ein Barbitursäure- oder Thiobarbitursäurederivat und (ii) mindestens ein Kupfersalz oder Kupferkomplex und (iii) mindestens eine Verbindung mit einem ionischen Halogenatom, besonders bevorzugt ist ein Redoxsystem umfassend 1-Benzyl-5-Phenylbarbitursäure, Kupferacetylacetonat, Triazin-Derivat, Toluidin-Derivat und/oder Benzyldibutylammoniumchlorid. Besonders bevorzugt wird die Polymerisation im 2-Komponenten Prothesenbasismaterial über ein Barbitursäurederivat gestartet.

Bevorzugt ist das Initiatorsystem ein Redoxsystem ausgewählt aus den zwei Komponenten, mit Komponente 1 umfassend ein Peroxid, und ein Reduktionsmittel ausgewählt aus Ascorbinsäure, Ascorbinsäurederivat, Barbitursäure oder ein Barbitursäurederivat, Sulfinsäure, Sulfinsäurederviat, besonders bevorzugt ist ein Redoxsystem umfassend (i) Barbitursäure oder Thiobarbitursäure oder ein Barbitursäure- oder Thiobarbitursäurederivat und Komponenten 2 umfassend mindestens ein Kupfersalz oder Kupferkomplex und (iii) mindestens eine Verbindung mit einem ionischen Halogenatom, besonders bevorzugt ist ein Redoxsystem umfassend 1-Benzyl-5-Phenylbarbitursäure, Kupferacetylacetonat, Triazin-Derivat, Toluidin-Derivat und/oder Benzyldibutylammoniumchlorid ausgewählt, wobei die Komponente 1 und die Komponente 2 voneinander separiert in den Komponenten A) und B) vorliegen. Gleichfalls kann das Redoxsystem zwei Komponenten 1 und 2 umfassen, wobei Komponente 1 umfasst Dibenzoylperoxid und/oder Dilauroylperoxid und optional Campherchinon und Komponente 2 umfasst Amine, insbesondere ausgewählt aus 2-n-Butoxyethyl-4-(dimethylamino)benzoat, N,N-Dimethyl-p-toluidin, N-N-Dihydroxyethyl-p-toluidin und p-Dimethylaminobenzoesäurediethylester.

Die erfindungsgemäße Klebstoffzusammensetzung kann eine Viskosität von 50 bis 5000 mPa·s aufweisen. Dabei ist es besonders vorteilhaft, dass die Viskosität der Zusammensetzung je nach Anwendung eingestellt werden kann, so kann sie eine geringe Viskosität von 50 bis 100 mPa·s, eine mittlere Viskosität von 300 bis 600 mPa·s, vorzugsweise um 450 mPa·s mit +/- 25 mPa·s aufweisen, oder eine hohe Viskosität von 1500 bis 2000 mPa·s aufweisen kann. Zur ersten haftklebrigen Befestigung von künstlichen Zähnen in der Kavität der Prothesenbasis kann eine hohe Viskosität vorteilhaft sein, um die Zähne justierbar in der Kavität zu positionieren. Eine geringe Viskosität erlaubt ein Auffüllen der Randspalten zwischen den Kavitätenrändern und den künstlichen Zähnen mit der Klebstoffzusammensetzung.

Zur weiteren Einstellung der Viskosität kann eine Klebstoffzusammensetzung als weitere Komponente zusätzlich (iv) mindestens eine pulverförmige Komponente polymerer Partikel umfassend Polymethylmethacrylat (PMMA) umfassen. Die pulverförmige Komponente liegt vorzugsweise im Gemisch mit dem olefinisch-funktionalisierte Kohlenhydrat oder olefinisch-funktionalisierte Kohlenhydrat-Derivat vor.

Gleichfalls bevorzugt ist ein Kit umfassend eine 2-Komponenten-Klebstoffzusammensetzung, insbesondere eine autopolymerisierbare 2-Komponenten dentale Klebstoffzusammensetzung, umfassend
A) mindestens eine polymerisierbare, flüssige Monomerkomponente,
B) mindestens ein olefinisch-funktionalisiertes Kohlenhydrat oder olefinisch funktionalisierte Kohlenhydrat-Derivat oder Gemisch dieser, wobei die Klebstoffzusammensetzung in Komponente (A) und/oder (B)
   (i) mindestens einen Polymerisationsinitiator und optional einen Polymerisationsbeschleuniger oder ein Initiatorsystem für die Autopolymerisation enthält.

Wie die nachfolgenden Ausführungsbeispiele aufzeigen, können mit der erfindungsgemäßen Klebstoffzusammensetzung dentale Verklebungen erzielt werden, die zumindest teilweise zu kohäsivem Bruch bis hin zu einem vollständigen kohäsiven Bruch des verklebten künstlichen Zahn führen, wenn die Verklebung nach der DIN 13998 (D), die der Bestimmung der Verbundfestigkeit zwischen Kunststoffzahn und Prothesenbasis dient, ermittelt wird.

Daher ist auch Gegenstand der Erfindung ein Verfahren zum Verkleben von zumindest Teilen eines künstlichen Zahns, vorzugsweise von künstlichen Zähnen, in jeweils einer Kavität zur Aufnahme eines künstlichen Zahnes einer dentalen Prothesenbasis, umfassend die Schritte a) Verwenden einer höher viskosen heiß- oder autopolymerisierbaren Klebstoffzusammensetzung zur Positionierung und Ausrichtung jeweils eines künstlichen Zahns in der Kavität zur Aufnahme des künstlichen Zahnes und
b) Verwenden einer niedrig viskosen photopolymerisierbaren Klebstoffzusammensetzung zum Auffüllen des zwischen dem Zahn und des Kavitätenrandes gebildeten Randspaltes, indem im Schritt
a) (i) ein Einbringen der heiß- oder autopolymerisierbaren Klebstoffzusammensetzung in die jeweilige Kavität, insbesondere einer definierten Menge an Klebstoff, die nach dem Einsetzen und Festdrücken des jeweiligen künstlichen Zahns in der jeweiligen Kavität nicht aus der Kavität heraustritt, oder
   (ii) - Versehen der basalen Seite des jeweiligen künstlichen Zahns mit der heiß- oder autopolymersierbaren Klebstoffzusammensetzung, insbesondere mit einer Viskosität von 800 bis 2000 mPa·s, und,
   - Einsetzen des jeweiligen Zahns mit der basalen Seite in die jeweilige Kavität der dentalen Prothesenbasis und,
   - optional Positionieren und Ausrichten des jeweiligen Zahns in der Kavität, und
b) (i) optional Auffüllen der gebildeten Randspalten zwischen dem Kavitätenrand der jeweiligen Kavität und dem jeweils eingesetzten Zahn mit einer polymerisierbaren Klebstoffzusammensetzung, insbesondere mit einer gering viskosen Klebstoffzusammensetzung, vorzugsweise mit einer Viskosität von 50 bis 100 mPa·s, besonders bevorzugt kann die Einbringung über eine Kanüle erfolgen, bevorzugt ist ein optionales Auffüllen der gebildeten Randspalten zwischen dem Kavitätenrand der jeweiligen Kavität und dem jeweils eingesetzten Zahn mit einer auto- und/oder photopolymerisierbaren Klebstoffzusammensetzung,
   (ii) optional Polymerisieren, insbesondere Photopolymerisieren und/oder Autopolymerisieren und optional Heißpolymerisieren der Klebstoffzusammensetzung und vorzugsweise Erhalten einer Prothesenbasis mit künstlichen Zähnen, die in den Kavitäten der Prothesenbasis mit einer polymerisierbaren Klebstoffzusammensetzung angeordnet sind.

Die Polymerisation der photopolymerisierbaren Klebstoffzusammensetzung kann mittels UV und/oder Vis-Licht, erfolgen, um diese Klebstoffzusammensetzung zumindest teilweise zu polymerisieren. Anschließend kann eine vollständige Polymerisation der heiß- und/oder autopolymerisierbaren sowie optional photopolymerisierbaren Klebstoffzusammensetzung bei erhöhter Temperatur erfolgen. Die Verarbeitungszeit der autopolymerisierbaren Klebstoffzusammensetzung kann durch Wahl des entsprechenden Initiators oder Initiatorsystems eingestellt werden.

Gegenstand der Erfindung ist auch eine Prothesenbasis mit verklebten künstlichen Zähnen erhältlich nach dem erfindungsgemäßen Verfahren.

Nach einer weiteren bevorzugten Ausführungsform ist Gegenstand der Erfindung die Verwendung der Klebstoffzusammensetzung oder des Kits zum Verkleben von Kunststoffen, gefüllten Kunststoffen, mineralischen Substraten, metallischen Substraten, insbesondere von dentalen Kunststoffen, dentalen gefüllten Kunststoffen, dentalen mineralischen Substraten und/oder dentalen metallischen Substraten. Gleichfalls Gegenstand der Erfindung ist die Verwendung der Klebstoffzusammensetzung oder des Kits zum Verkleben von dentalen, medizinischen oder chirurgischen prothetischen Teilen, wie Prothesenbasen mit künstlichen Zähnen, Kronen, Abutments, Stege, dentaler Suprastrukturen, dentalen Verblendungen, Implantaten, wie dentalen oder chirurgischen Implantaten, oder chirurgischer Prothesen, wie Teilen von Knochen, Kieferknochen, Gelenken; technischer Komponenten, elektronischer Bauteile, von Automotiv-Komponenten, Computerbauteilen, wie Displays, Bauteilen von Smartphones.

Als in dem mindestens einen radikalisch polymerisierbaren Monomer lösliches olefinisch funktionalisiertes Kohlenhydrat oder Kohlenhydrat-Derivat wird ein Kohlenhydrat verstanden, das sich in diesem polymerisierbaren Monomer zu wenigstens 10 g/l, vorzugsweise zu wenigstens 25 g/l, besonders bevorzugt zu wenigstens 50 g/l und ganz besonders bevorzugt zu wenigstens 100 g/l, löst (bei Raumtemperatur 20 °C).

Die Menge des in dem radikalisch polymerisierbaren Monomer löslichen Polymers in dem erfindungsgemässen Klebstoffzusammensetzung liegt üblicherweise in einem Bereich von 1 bis 85 Gew.-%, bezogen auf das Gesamtgewicht des Klebstoffzusammensetzung. Entsprechend kann der Gehalt an organischem Polymer jeweils unabhängig in einer der nachstehenden Pasten A, B und/oder Flüssigkeit B sowie der Pulverkomponente A von 1 bis 85 Gew.-% in Bezug auf die jeweilige Gesamtzusammensetzung an Paste, Flüssigkeit, oder Pulverkomponente betragen.

Die Erfindung wird durch die nachstehenden Beispiele erläutert, ohne jedoch die Erfindung auf diese Beispiele zu beschränken.

### Ausführungsbeispiele und Messmethoden

### Viskosität

| Messgerät: | Messsystem: |
|---|---|
| Rheometer: Anton Paar - Physica MCR 301 | Platte/Platte Messsystem Messplatte PP50 |
| Rotationszeitversuch: | Messprofil: (Vorqaben) |
| Messspalt = 0,2mm | Scherrate d(gamma)dt = 10 1/s konstant |
| Messtemperatur = 20°C | Zeitvorgabe = 20 Messpunkte; |
| | Messpunktdauer = 2 Sekunden. |
| | Wartezeit bis Versuchsstart = 1 Minute |

### Auswertung:

Erstellen einer Mittelwertskurve aus den Einzelmessungen; Berechnungsart = Arithmetisches Mittel; 2. Mittelung aller Datenpunkte der Mittelwertskurve; Berechnung der Viskosität in [mPa·s] bei 20°C

Die Bestimmung der Adhäsion oder Kohäsion erfolgte an einer Zwick 2010 Apparatur nach DIN 13998 (2012), wobei abweichend zur Norm ein reiner Kohäsionsbruch angestrebt wurde. Die Klebstoffzusammensetzung umfassend das Pulver bzw. das olefinisch-funktionalisierte Kohlenhydrat bzw. -Derivat enthält als Polymerisationsinitiator und Polymerisationsbeschleuniger Speedcure BEDB (2-n-Butoxyethyl-4-(dimethyl-amino)-benzoat) und Perkadox L-DFG ((Di)-Benzoylperoxid). Die Bruchfestigkeit wurde mit einer Zwick 2010 Maschine in Anlehnung an DIN13998 bestimmt.

**Tabelle 1: Gegenüberstellung der Bruchfestigkeit der Verklebung sowie der Verarbeitungszeiten.**

| Mischung | Pulver | Flüssigkeit | Verarbeitungszeit [h] | Scherhaftung Bruchfestigkeit Fₘₐₓ [N] |
|---|---|---|---|---|
| 1 | Jaylink 103M^{[*]} (polymerisierbare Cellulose) | EMA | 24h | 449 Kohäsivbruch |
| 2 | Jaylink 103M (polymerisierbare Cellulose) | MMA | - | 192 teilweise Kohäsivbruch |
| 3 | PMMA M_{w} 332 | MMA | 9 min | 319 Kohäsivbruch |
| 4 | Cellulose Ethocel std. 45 Premium (nicht polymerisierbare Cellulose) | EMA | | 115 Adhäsivbruch |
| 5 | PMMA M_{w} 332: Jaylink 103M (7:1) | MMA | 15 min | 294 Kohäsivbruch |
| 6 | Wieland dental CAD CAM bond | MMA | 6 - 10 min | 209 teilweise Kohäsivbruch |

| | | | | |
|---|---|---|---|---|
| ^{[∗]}Jaylink 103M Mₙ ca. 10.000 g/mol | | | | |

Anhand der Ergebnisse in Tabelle 1 ist erkennbar, dass mit den Mischungen von olefinisch-funktionalisierter Cellulose und Methylmethacrylat oder Ethylmethacrylat gute Bruchfestigkeiten erzielt werden können. Mit der Klebstoffzusammensetzung in der Kombination Ethylmethacrylat mit olefinisch-funktionalisierter Cellulose konnte zusätzlich einerseits die Verarbeitungszeit ganz erheblich auf 24 Stunden verlängert werden und zugleich die Bruchfestigkeit auf Fₘₐₓ = 449 [N], die zu einem reinen Kohäsivbruch führt, gesteigert werden.

**Tabelle 2: Abschätzung der Verarbeitungszeiten in Stunden [h] der ersten Mischung in Tabelle 1 über Viskositätsmessungen**

| | | | | | |
|---|---|---|---|---|---|
| Zeit nach Herstellung der Mischung | 0 h | 0,5 h | 1,5 h | 3,5 h | 24 h |
| Viskosität (mPa.s) | 448,7 | 452,3 | 455,4 | 441,3 | Gelbildung |

Es wurde eine Mischung 1 von 14 g aus Cellulose zu EMA im Gewichtsverhältnis 1:3.2 hergestellt, die als mittelviskos (450 mPa·s) eingestuft wird. Die Viskosität von 14 g der Mischung wurden unmittelbar nach Zugabe des Initiators und des Beschleunigers Perkadox L-DFG und Speedcure BEDB bei 20 °C mit dem Viskosimeter Anton Paar Physica MCR301 Rheometer ab einer Scherrate von 10 (1/s) bestimmt.

Die vorstehenden Messergebnisse zeigen innerhalb der ersten 3,5 Stunden lediglich eine vernachlässigbare Veränderung der Viskosität. In weiteren Versuchen wurden 2.3 g der Mischung 1 mit Initiator versetzt, die diese Ergebnisse visuell bestätigten. Der Klebstoff war auch noch nach 24 h applizierbar.

Eine Vormischung umfassend olefinisch-funktionalisierte Cellulose zu EMA im Gewichtsverhältnis von 1:3.2, mit einem Gehalt von 2 Gew.-% Amin(e) wurde für einen Monat bei 37 °C gelagert und die Veränderung der Viskosität bestimmt, siehe Tabelle 3. Über einen Zeitraum von 8 Wochen wurde keine Veränderung beobachtet.

**Tabelle 3: Viskositätsmessungen in Stunden [h] und Wochen [w]**

| | | | | | |
|---|---|---|---|---|---|
| Zeit nach Herstellung der Mischung | 0 h | 1 w | 2 w | 4 w | 8 w |
| Viskosität (mPa s) | 586,2 | 576,2 | 562,3 | 569 | Visuelle keine Veränderungen. |

Die Figuren 1 bis 4 zeigen:
- Fig. 1:: Kohäsivbruch der Mischung 1
- Fig. 2:: Adhäsiv- und Kohäsivbruch der Mischung 2
- Fig. 3:: Artikulator zur Bestimmung der Okklusion
- Fig. 4:: Schematische Darstellung der Verklebung eines künstlichen Zahns mit einem hochviskosen Klebstoff 2 und einem gering viskosen Klebstoff 1.

## Patentansprüche

1. Polymerisierbare mindestens ein Kohlenhydrat enthaltende Klebstoffzusammensetzung umfassend
(i) mindestens ein polymerisierbares, flüssiges Monomer,
**dadurch gekennzeichnet, dass** sie umfasst
(ii) mindestens einen Polymerisationsinitiator und/oder Initiatorsystem für die Polymerisation, enthaltend
1) einen Inititator für die Heiß- oder Autopolymerisation umfassend ein Peroxid und/oder eine Azoverbindung, und optional als Polymerisationsbeschleuniger ein aromatisches tertiäres Amin, oder
2) ein Redoxsystem umfassend a) ein Peroxid, Diketon und Amin oder b) (i) Barbitursäure oder Thiobarbitursäure oder ein Barbitursäure- oder Thiobarbitursäurederivat und (ii) mindestens ein Kupfersalz oder Kupferkomplex und (iii) mindestens eine Verbindung mit einem ionischen Halogenatom und optional
3) einen Photoinitiator umfassend α-Hydroxyketon, Azoverbindung oder Acylphosphinoxid, und
(iii) mindestens ein polymerisierbares olefinisch-funktionalisiertes Kohlenhydrat, olefinisch-funktionalisiertes Kohlenhydrat-Derivat oder Gemisch dieser.

2. Klebstoffzusammensetzung nach Anspruch 1,
**dadurch gekennzeichnet, dass**
(iii) ein in (i) lösliches olefinisch-funktionalisiertes Kohlenhydrat, olefinisch-funktionalisiertes Kohlenhydrat-Derivat, insbesondere olefinisch-funktionalisierte Ester und/oder Ether von Kohlenhydraten, oder Gemisch dieser ist.

3. Klebstoffzusammensetzung nach Anspruch 1 oder 2,
**dadurch gekennzeichnet, dass**
die Zusammensetzung zwei Komponenten A und B umfasst, wobei
(i) Komponente A als Paste vorliegt und umfasst
(a1) mindestens ein polymerisierbares, flüssiges Monomer,
(a2) mindestens ein in (a1) lösliches olefinisch-funktionalisiertes Kohlenhydrat, olefinisch-funktionalisiertes Kohlenhydrat-Derivat oder Gemisch dieser,
und
Komponente B als Paste vorliegt und umfasst
(b1) mindestens ein polymerisierbares, flüssiges Monomer,
(b2) mindestens ein in (i), (b1) lösliches olefinisch-funktionalisiertes Kohlenhydrat, olefinisch funktionalisiertes Kohlenhydrat-Derivat oder Gemisch dieser,
oder
(ii) Komponente A als Pulver vorliegt und umfasst
(a1) mindestens ein pulverförmiges olefinisch-funktionalisiertes Kohlenhydrat, olefinisch-funktionalisiertes Kohlenhydrat-Derivat oder Gemisch dieser, und
Komponente B als Flüssigkeit oder Paste vorliegt und umfasst
(b1) mindestens eine polymerisierbares, flüssiges Monomer, und
(b2) optional mindestens ein in (ii), (a1) lösliches pulverförmiges olefinisch-funktionalisiertes Kohlenhydrat, olefinisch-funktionalisiertes Kohlenhydrat-Derivat oder Gemisch dieser,
und die jeweilige Komponente (A) und/oder (B) in (i) und (ii) mindestens einen Polymerisationsinitiator oder ein Initiatorsystem für die radikalische Polymerisation, und/oder für die Photo-Polymerisation enthält.

4. Klebstoffzusammensetzung nach einem der Ansprüche 1 bis 3,
**dadurch gekennzeichnet, dass**
das polymerisierbare, flüssige Monomer umfasst
a) mindestens ein Acrylat, Acrylsäurealkylester, Alkyl-2-acrylsäurealkylester, Aryl-2-acrylsäurealkylester, Arylalkyl-2-acrylsäurealkylester, jeweils unabhängig mit 1 bis 20 C-Atomen in der Alkyl-Gruppe, jeweils unabhängig mit 6 bis 14 C-Atomen in der Aryl-Gruppe, jeweils unabhängig mit 6 bis 14 C-Atomen in der Arylalkyl-Gruppe und jeweils unabhängig mit 1 bis 10 C-Atomen in der Alkylester-Gruppe oder einer Mischung umfassend mindestens zwei der genannten Monomere, und/oder
b) N-Alkyl- oder N-Alkenyl-substituiertes Acryloyloxy-Carbamat mit einer Molmasse von kleiner gleich 250 g/mol, di-funktionelles Urethan(meth)acrylat, wie UDMA, multifunktionelles Urethan(meth)acrylat Oligomer oder auch Dendrimer, und/oder
c) di-, tri-, tetra- oder multi-funktionelles Monomer, das kein Urethan(meth)acrylat ist, oder eine Mischung umfassend mindestens zwei der genannten Monomere.

5. Klebstoffzusammensetzung nach einem der Ansprüche 1 bis 4,
**dadurch gekennzeichnet, dass**
das polymerisierbare, flüssige Monomer umfasst mindestens ein Acrylat ausgewählt aus Acrylat, Methyl(meth)acrylat (Methacrylsäuremethylester, MMA), Methacrylsäureethylester (EMA), Ethylacrylsäureethylester, insbesondere Methacrylsäureethylester.

6. Klebstoffzusammensetzung nach einem der Ansprüche 1 bis 3,
**dadurch gekennzeichnet, dass**
das polymerisierbare olefinisch-funktionalisierte Kohlenhydrat, olefinisch-funktionalisierte Kohlenhydrat-Derivat oder Gemisch dieser umfasst mindestens ein olefinisch-funktionalisiertes Di- und Polysaccharid, olefinisch-funktionalisiertes Di- und Polysaccharid-Derivat, olefinisch-funktionalisierte Cellulose, olefinisch-funktionalisiertes Cellulose-Derivat, olefinisch-funktionalisierte Stärke, olefinisch-funktionalisierte Stärke-Derivat, olefinisch-funktionalisierte Chitin und/oder olefinisch-funktionalisierte Chitin-Derivat, insbesondere olefinisch-funktionalisierte Ester, Ether, Carbamate und/oder Amide der vorgenannten Kohlenhydrate.

7. Klebstoffzusammensetzung nach einem der Ansprüche 1 bis 6,
**dadurch gekennzeichnet, dass**
das polymerisierbare olefinisch-funktionalisierte Kohlenhydrat, olefinisch-funktionalisierte Kohlenhydrat-Derivat oder Gemisch dieser umfasst eine olefinisch-funktionalisierte Cellulose, Cellulose-Derivat oder eine Mischung dieser.

8. Klebstoffzusammensetzung nach einem der Ansprüche 1 bis 7,
**dadurch gekennzeichnet, dass**
das polymerisierbare olefinisch-funktionalisierte Kohlenhydrat, olefinisch funktionalisierte Kohlenhydrat-Derivat oder Gemisch dieser als mindestens einen olefinischen Rest umfasst Alkenyl-Rest, Alkenaryl-Rest, ungesättigten Acyl-Rest, Acryloyl-Rest, Acryl-Rest, Acrylamido-Rest, 2-Alkyl-Acryl-Rest, 2-Alkyl-Acryloyl-Rest, wobei die Alkyl-Gruppe 1 bis 10 C-Atomen umfasst, 2-Alkyl-Acrylamido-Rest, wobei die Alkyl-Gruppe 1 bis 10 C-Atome umfasst oder
mindestens einen über mindestens ein bifunktionelles Heteroatom ausgewählt aus O, N und S-Atomen verbrückten Acryl-Rest, 2-Alken-Acryl-Rest, Alkenyl-Rest, Alkenaryl-Rest, ungesättigten Acyl-Rest, insbesondere mindestens einen über bifunktionelle -O- oder -NHverbrückten Acryl-Rest, 2-Alken-Acryl-Rest, Alkenyl-Rest, Alkenaryl-Rest, ungesättigten Acyl-Rest umfasst.

9. Klebstoffzusammensetzung nach einem der Ansprüche 1 bis 8,
**dadurch gekennzeichnet, dass**
das olefinisch-funktionalisierte Kohlenhydrat oder olefinisch-funktionalisierte Kohlenhydrat-Derivat umfasst olefinisch funktionalisiertes Celluloseacetatbutyrat, (Acryloylalkyl)celluloseacetatbutyrat, (Acrylamidoalkyl)celluloseacetatbutyrat, jeweils
unabhängig mit 1 bis 10 C-Atomen in der bifunktionellen Alkyl-Gruppe, insbesondere (Acryloylmethyl)celluloseacetatbutyrat, (Acryloylethyl)celluloseacetatbutyrat, (Acrylamidoethyl)celluloseacetatbutyrat und/oder (Acrylamidomethyl)celluloseacetatbutyrat.

10. Klebstoffzusammensetzung nach einem der Ansprüche 1 bis 9,
**dadurch gekennzeichnet, dass**
das olefinisch-funktionalisierte Kohlenhydrat oder olefinisch funktionalisierte Kohlenhydrat-Derivat ausgewählt ist (Acrylamidomethyl)celluloseacetatbutyrat oder (Acrylamidoethyl)celluloseacetatbutyrat.

11. Klebstoffzusammensetzung nach einem der Ansprüche 1 bis 10,
**dadurch gekennzeichnet, dass**
das olefinisch-funktionalisierte Kohlenhydrat oder olefinisch-funktionalisierte Kohlenhydrat-Derivat ein Zahlenmittel der Molekulargewichtsverteilung von Mn 1.000 bis 50.000 g/mol aufweist, insbesondere von 5.000 g/mol bis 40.000 g/mol, vorzugsweise von 10.000 g/mol (GPC) bis Mn 30.000 g/mol (GPC), jeweils ermittelt mittels GPC.

12. Klebstoffzusammensetzung nach einem der Ansprüche 1 bis 11, **dadurch gekennzeichnet, dass**
die Klebstoffzusammensetzung eine dentale heiß- oder autopolymersierbare Klebstoffzusammensetzung ist, umfassend
(i) 60 bis 78 Gew.-% mindestens ein polymerisierbares, flüssiges Monomer, insbesondere umfassend Methylacrylsäuremethylester (MMA) und/oder Methylacrylsäureethylester (EMA) oder eine Mischung enthaltend mindestens eines der beiden Monomere, bevorzugt ist Methylacrylsäureethylester (EMA),
(ii) 0 bis 5 Gew.-% mindestens einen Polymerisationsinitiator, insbesondere ein Peroxid und optional einen Polymerisationsbeschleuniger, insbesondere ein aromatisches tertiäres Amin, und/oder ein Initiatorsystem zur Polymerisation, und
(iii) 22 bis 40 Gew.-% mindestens ein polymerisierbares olefinisch-funktionalisiertes Kohlenhydrat, olefinisch-funktionalisiertes Kohlenhydrat-Derivat oder Gemisch dieser, insbesondere Acrylamidomethylcelluloseacetatbutyrat und/oder Acrylamido-ethylcelluloseacetatbutyrat, wobei die Gesamtzusammensetzung 100 Gew.-% entspricht.

13. Klebstoffzusammensetzung nach einem der Ansprüche 1 bis 12, **dadurch gekennzeichnet, dass** die Zusammensetzung eine Viskosität von 50 bis 5000 mPa·s (20 °C) aufweist, insbesondere weist die Zusammensetzung je nach Anwendung ein geringe Viskosität von 50 bis 100 mPa·s, eine mittlere Viskosität von 300 bis 600 mPa·s, vorzugsweise um 450 mPa·s mit +/- 25 mPa·s, oder eine hohe Viskosität von 1500 bis 2000 mPa·s auf.

14. Klebstoffzusammensetzung nach einem der Ansprüche 1 bis 13, **dadurch gekennzeichnet, dass** die Zusammensetzung eine autopolymerisierbare 2-Komponenten-Klebstoffzusammensetzung ist, insbesondere eine dentale autopolymerisierbare 2-Komponenten Klebstoffzusammensetzung.

15. Kit umfassend eine 2-Komponenten-Klebstoffzusammensetzung, insbesondere nach einem der Ansprüche 3 bis 14, umfassend
A) mindestens eine polymerisierbare, flüssige Monomerkomponente,
B) mindestens ein olefinisch-funktionalisiertes Kohlenhydrat oder olefinisch-funktionalisierte Kohlenhydrat-Derivat oder Gemisch dieser,
**dadurch gekennzeichnet, dass**
die Klebstoffzusammensetzung in Komponente (A) und/oder (B)
(i) mindestens einen Polymerisationsinitiator und optional einen Polymerisationsbeschleuniger oder ein Initiatorsystem für die Autopolymerisation enthält.

16. Verfahren zum Verkleben von künstlichen Zähnen in jeweils einer Kavität zur Aufnahme von zumindest Teilen eines künstlichen Zahns in einer dentalen Prothesenbasis, umfassend die Schritte
a) Verwenden einer höher viskosen heiß- oder autopolymerisierbaren Klebstoffzusammensetzung (2) zur Positionierung und Ausrichtung jeweils eines künstlichen Zahns in einer Kavität zur Aufnahme eines künstlichen Zahns und
b) Verwenden einer niedrig viskosen photopolymerisierbaren Klebstoffzusammensetzung (1) zum Auffüllen des zwischen dem Zahn und des Kavitätenrandes gebildeten Randspaltes,
indem im Schritt
a) (i) ein Einbringen der heiß- oder autopolymerisierbaren Klebstoffzusammensetzung nach einem derAnsprüche 1 bis 14 in die jeweilige Kavität erfolgt, insbesondere in einer Menge der Klebstoffzusammensetzung, die nach dem Einsetzen und Festdrücken des jeweiligen künstlichen Zahns in der jeweiligen Kavität nicht aus der Kavität heraustritt, oder
(ii) Versehen der basalen Seite des jeweiligen künstlichen Zahns mit der heiß- oder autopolymersierbaren Klebstoffzusammensetzung, und
- Einsetzen des jeweiligen Zahns mit der basalen Seite in die jeweilige Kavität der dentalen Prothesenbasis, und
- optional Positionieren und Ausrichten des Zahns in der jeweiligen Kavität, und
b) (i) optional Auffüllen der gebildeten Randspalten zwischen dem Kavitätenrand der jeweiligen Kavität und dem jeweils eingesetzten Zahn mit einer photopolymerisierbaren Klebstoffzusammensetzung.

17. Verwendung der Klebstoffzusammensetzung nach einem der Ansprüche 1 bis 14 oder des Kits nach Anspruch 15, zum Verkleben von Kunststoffen, gefüllten Kunststoffen, mineralischer Substrate, metallischer Substrate, dentaler Kunststoffe, dentaler gefüllter Kunststoffe, dentaler mineralischer Substrate und/oder dentaler metallischer Substrate, dentaler, medizinischer oder chirurgischer prothetischer Teile, wie Prothesenbasen mit künstlichen Zähnen, Kronen, Abutments, Stege, dentaler Suprastrukturen, dentaler Verblendungen, Implantate, technischer Komponenten, elektronischer Bauteile, von Automotiv-Komponenten, Computerbauteilen.

## Claims

1. Polymerisable adhesive composition containing at least one carbohydrate comprising
(i) at least one polymerisable liquid monomer,
**characterised in** comprising
(ii) at least one polymerisation initiator and/or initiator system for polymerisation, containing
1) an initiator for hot- or auto-polymerisation comprising a peroxide and/or an azo compound, and optionally an aromatic tertiary amine as polymerisation accelerator, or
2) a redox system comprising a) a peroxide, diketone and amine or b) (i) barbituric acid or thiobarbituric acid or a barbituric acid or thiobarbituric acid derivative and (ii) at least one copper salt or copper complex and (iii) at least one compound having an ionic halogen atom, and optionally
3) a photoinitiator comprising α-hydroxyketone, azo compound or acylphosphine oxide, and
(iii) at least one polymerisable olefinically functionalised carbohydrate, olefinically functionalised carbohydrate derivative or mixture thereof.

2. Adhesive composition according to claim 1,
**characterised in that**
(iii) is an olefinically functionalised carbohydrate, olefinically functionalised carbohydrate derivative, in particular olefinically functionalised esters and/or ethers of carbohydrates, or mixture thereof, being soluble in (i).

3. Adhesive composition according to claim 1 or 2,
**characterised in that**
the composition comprises two components A and B,
(i) component A being present as paste and comprising
(a1) at least one polymerisable liquid monomer,
(a2) at least one olefinically functionalised carbohydrate, olefinically functionalised carbohydrate derivative or mixture thereof, being soluble in (a1),
and
component B being present as paste and comprising
(b1) at least one polymerisable liquid monomer,
(b2) at least one olefinically functionalised carbohydrate, olefinically functionalised carbohydrate derivative or mixture thereof, being soluble in (i), (b1),
or
(ii) component A being present as powder and comprising
(a1) at least one powdered olefinically functionalised carbohydrate, olefinically functionalised carbohydrate derivative or mixture thereof, and
component B being present as liquid or paste and comprising
(b1) at least one polymerisable liquid monomer, and
(b2) optionally at least one powdered olefinically functionalised carbohydrate, olefinically functionalised carbohydrate derivative or mixture thereof, being soluble in (ii), (a1),
and the respective component (A) and/or (B) contains in (i) and (ii) at least one polymerisation initiator or an initiator system for radical polymerisation, and/or for photo-polymerisation.

4. Adhesive composition according to any one of claims 1 to 3,
**characterised in that**
the polymerisable liquid monomer comprises
a) at least one acrylate, acrylic acid alkyl ester, alkyl 2-acrylic acid alkyl ester, aryl 2-acrylic acid alkyl ester, aryl alkyl 2-acrylic acid alkyl ester, each independently having 1 to 20 C-atoms in the alkyl group, each independently having 6 to 14 C-atoms in the aryl group, each independently having 6 to 14 C-atoms in the aryl alkyl group and each independently having 1 to 10 C-atoms in the alkyl ester group, or a mixture comprising at least two of the said monomers, and/or
b) N-alkyl- or N-alkenyl-substituted acryloyloxy carbamate having a molecular mass of less than or equal to 250 g/mol, di-functional urethane (meth)acrylate, such as UDMA, multi-functional urethane (meth)acrylate oligomer or also dendrimer, and/or
c) di-, tri-, tetra- or multi-functional monomer, not being urethane (meth)acrylate, or a mixture comprising at least two of the said monomers.

5. Adhesive composition according to any one of claims 1 to 4,
**characterised in that**
the polymerisable liquid monomer comprises at least one acrylate selected from acrylate, methyl (meth)acrylate (methacrylic acid methyl ester, MMA), methacrylic acid ethyl ester (EMA), ethyl acrylic acid ethyl ester, in particular methacrylic acid ethyl ester.

6. Adhesive composition according to any one of claims 1 to 3,
**characterised in that**
the polymerisable olefinically functionalised carbohydrate, olefinically functionalised carbohydrate derivative or mixture thereof comprises at least one olefinically functionalised di- and polysaccharide, olefinically functionalised di- and polysaccharide derivative, olefinically functionalised cellulose, olefinically functionalised cellulose derivative, olefinically functionalised starch, olefinically functionalised starch derivative, olefinically functionalised chitin and/or olefinically functionalised chitin derivative, in particular olefinically functionalised esters, ethers, carbamates and/or amides of the said carbohydrates.

7. Adhesive composition according to any one of claims 1 to 6,
**characterised in that**
the polymerisable olefinically functionalised carbohydrate, olefinically functionalised carbohydrate derivative or mixture thereof comprises an olefinically functionalised cellulose, cellulose derivative or a mixture thereof.

8. Adhesive composition according to any one of claims 1 to 7,
**characterised in that**
the polymerisable olefinically functionalised carbohydrate, olefinically functionalised carbohydrate derivative or mixture thereof comprises, as at least one olefinic residue, alkenyl residue, alkene aryl residue, unsaturated acyl residue, acryloyl residue, acryl residue, acrylamide residue, 2-alkyl acryl residue, 2-alkyl acryloyl residue, the alkyl group comprising 1 to 10 C-atoms, 2-alkyl acrylamide residue, the alkyl group comprising 1 to 10 C-atoms, or
at least one acryl residue, 2-alkene acryl residue, alkenyl residue, alkene aryl residue, unsaturated acyl residue, being bridged over at least one bifunctional heteroatom selected from O-, N- and S-atoms, in particular at least one acryl residue, 2-alkene acryl residue, alkenyl residue, alkene aryl residue, unsaturated acyl residue, being bridged over bifunctional -O- or NH-.

9. Adhesive composition according to any one of claims 1 to 8,
**characterised in that**
the olefinically functionalised carbohydrate or olefinically functionalised carbohydrate derivative comprises olefinically functionalised cellulose acetate butyrate, (acryloyl alkyl) cellulose acetate butyrate, (acrylamide alkyl) cellulose acetate butyrate, each independently having 1 to 10 C-atoms in the bifunctional alkyl group, in particular (acryloyl methyl) cellulose acetate butyrate, (acryloyl ethyl) cellulose acetate butyrate, (acrylamide ethyl) cellulose acetate butyrate and/or (acrylamide methyl) cellulose acetate butyrate.

10. Adhesive composition according to any one of claims 1 to 9,
**characterised in that**
the olefinically functionalised carbohydrate or olefinically functionalised carbohydrate derivative is selected from (acrylamide methyl) cellulose acetate butyrate or (acrylamide ethyl) cellulose acetate butyrate.

11. Adhesive composition according to any one of claims 1 to 10,
**characterised in that**
the olefinically functionalised carbohydrate or olefinically functionalised carbohydrate derivative has a number average of the molecular weight distribution of Mn 1,000 to 50,000 g/mol, in particular of 5,000 g/mol to 40,000 g/mol, preferably of 10,000 g/mol (GPC) to Mn 30,000 g/mol (GPC), each determined by means of GPC.

12. Adhesive composition according to any one of claims 1 to 11, **characterised in that** the adhesive composition is a dental hot- or auto-polymerisable adhesive composition, comprising
(i) 60 to 78 % by weight at least one polymerisable liquid monomer, in particular comprising methyl acrylic acid methyl ester (MMA) and/or methyl acrylic acid ethyl ester (EMA) or a mixture comprising at least one of the two monomers, methyl acrylic acid ethyl ester (EMA) is prefered,
(ii) 0 to 5 % by weight at least one polymerisation initiator, in particular a peroxide and optionally a polymerisation accelerator, in particular an aromatic tertiary amine, and/or an initiator system for polymerisation, and
(iii) 22 to 40 % by weight at least one polymerisable olefinically functionalised carbohydrate, olefinically functionalised carbohydrate derivative or mixture thereof, in particular acrylamide methyl cellulose acetate butyrate and/or acrylamide ethyl cellulose acetate butyrate, the total composition equating to 100 % by weight.

13. Adhesive composition according to any one of claims 1 to 12, **characterised in that** the composition has a viscosity of 50 to 5000 mPa·s (20 °C), in particular the composition has a low viscosity of 50 to 100 mPa·s, a medium viscosity of 300 to 600 mPa·s, preferably about 450 mPa·s with +/- 25 mPa·s, or a high viscosity of 1500 to 2000 mPa·s, depending on the application.

14. Adhesive composition according to any one of claims 1 to 13, **characterised in that** the composition is an auto-polymerisable 2-component adhesive composition, in particular a dental auto-polymerisable 2-component adhesive composition.

15. Kit comprising a 2-component adhesive composition, in particular according to any one of claims 3 to 14, comprising
A) at least one polymerisable liquid monomer component,
B) at least one olefinically functionalised carbohydrate or olefinically functionalised carbohydrate derivative or mixture thereof,
**characterised in that**
the adhesive composition contains in component (A) and/or (B)
(i) at least one polymerisation initiator and optionally a polymerisation accelerator or an initiator system for auto-polymerisation.

16. Method for adhering artificial teeth in respectively one cavity to receive at least parts of an artificial tooth in a dental prosthesis base, comprising the steps of:
a) using a higher viscous hot- or auto-polymerisable adhesive composition (2) for positioning and orientating respectively one artificial tooth in a cavity to receive an artificial tooth, and
b) using a lower viscous photo-polymerisable adhesive composition (1) for filling the marginal gap formed between the tooth and the cavity margin,
by, in step
a) (i) carrying out an insertion of the hot- or auto-polymerisable adhesive composition according to any one of claims 1 to 16 in the respective cavity, in particular in an amount of the adhesive composition which does not escape from the cavity after insertion and pressing of the respective artificial tooth into the respective cavity,
(ii) providing the basal side of the respective artificial tooth with the hot- or auto-polymerisable adhesive composition, and
- inserting the respective tooth with the basal side into the respective cavity of the dental prosthesis base, and
- optionally positioning and orientating the tooth in the respective cavity, and
b) (i) optionally filling the marginal gap formed between the cavity margin of the respective cavity and the respective tooth inserted with a photo-polymerisable adhesive composition.

17. Use of the adhesive composition according to any one of claims 1 to 14 or of the kit according to claim 15, for adhering plastics, filled plastics, mineral substrates, metallic substrates, dental plastics, dental filled plastics, dental mineral substrates and/or dental metallic substrates, dental, medical or surgical prosthetic parts, such as prosthesis bases with artificial teeth, crowns, abutments, bars, dental superstructures, dental veneers, implants, technical components, electronic components, of automotive components, computer components.

## Revendications

1. Composition adhésive polymerisable contenant au moins un hydrate de carbone comprenant
(i) au moins un monomère liquide polymerisable,
**caractérisée** en comprenant
(ii) au moins un initiateur de polymérisation et/ou un système initiateur pour la polymérisation, contenant
1) un initiateur pour la polymérisation à chaud ou l'autopolymérisation comprenant un peroxyde et/ou un composé azoïque, et facultativement une amine tertiaire aromatique en tant qu'accélérateur de polymérisation, ou
2) un système redox comprenant a) un peroxyde, un dicétone et une amine ou b) (i) de l'acide barbiturique ou de l'acide thiobarbiturique ou un dérivé à acide barbiturique ou l'acide thiobarbiturique et (ii) au moins un sel de cuivre ou un complexe de cuivre et (iii) au moins un composé ayant un atome d'halogène ionique, et facultativement
3) un photoinitiateur comprenant de l'a-hydroxycétone, du composé azoique ou de l'oxide d'acyle-phosphine, et
(iii) au moins un hydrate de carbone polymerisable fonctionnalisé oléfiniquement, un dérivé à hydrate de carbone polymerisable fonctionnalisé oléfiniquement ou un mélange desquels.

2. Composition adhésive selon la revendication 1,
**caractérisée en ce que**
(iii) est un hydrate de carbone fonctionnalisé oléfiniquement, un dérivé à hydrate de carbone fonctionnalisé oléfiniquement, en particulier des esters et/ou éthers des hydrates de carbone fonctionnalisés oléfiniquement, ou un mélange desquels, étant soluble dans (i).

3. Composition adhésive selon la revendication 1 ou 2,
**caractérisée en ce que**
la composition comprend deux composants A et B,
(i) composant A étant présent en tant que pâte et comprenant
(a1) au moins un monomère liquide polymérisable,
(a2) au moins un hydrate de carbone fonctionnalisé oléfiniquement, un dérivé à hydrate de carbone fonctionnalisé oléfiniquement ou un mélange desquels, étant soluble dans (a1),
et
composant B étant présent en tant que pâte et comprenant
(b1) au moins un monomère liquide polymérisable,
(b2) au moins un hydrate de carbone fonctionnalisé oléfiniquement, un dérivé à hydrate de carbone fonctionnalisé oléfiniquement ou un mélange desquels, étant soluble dans (i), (b1),
ou
(ii) composant A étant présent en tant que poudre et comprenant
(a1) au moins un hydrate de carbone fonctionnalisé oléfiniquement pulvérulent, un dérivé à hydrate de carbone fonctionnalisé oléfiniquement pulvérulent ou un mélange desquels, et
composant B étant présent en tant que liquide ou pâte et comprenant
(b1) au moins un monomère liquide polymérisable, et
(b2) facultativement au moins un hydrate de carbone fonctionnalisé oléfiniquement pulvérulent, un dérivé à hydrate de carbone fonctionnalisé oléfiniquement pulvérulent ou un mélange desquels, étant soluble dans (ii), (a1),
et le composants (A) et/ou (B) respectif contient dans (i) et (ii) au moins un initiateur de polymérisation ou un système initiateur pour la polymérisation radicalaire, et/ou pour la photopolymérisation.

4. Composition adhésive selon l'une des revendications 1 à 3,
**caractérisée en ce que**
le monomère liquide polymérisable comprend
a) au moins un acrylate, un ester alkylique d'acide acrylique, un ester alkylique d'acide 2-acrylique d'alkyle, un ester alkylique d'acide 2-acrylique d'aryle, un ester alkylique d'acide 2-acrylique d'alkyle d'aryle, chacun indépendamment ayant 1 à 20 atomes C dans le groupe alkyle, chacun indépendamment ayant 6 à 14 atomes C dans le groupe aryle, chacun indépendamment ayant 6 à 14 atomes C dans le groupe alkyle d'aryle, et chacun indépendamment ayant 1 à 10 atomes C dans le groupe ester alkylique, ou un mélange comprenant au moins deux desdites monomères, et/ou
b) du carbamate d'acryloyloxy substitué N-alkyle ou N-alkényle ayant une masse moléculaire d'inférieure ou égale à 250 g/mol, du (méth)acrylate d'uréthane di-fonctionnel, telle que de l'UDMA, de l'oligomère ou aussi du dendrimère de (méth)acrylate d'uréthane multi-fonctionnel, et/ou
c) du monomère di-, tri-, tetra- ou multi-fonctionnel, n'étant pas du (méth)acrylate d'uréthane, ou un mélange comprenant au moins deux desdites monomères.

5. Composition adhésive selon l'une des revendications 1 à 4,
**caractérisée en ce que**
le monomère liquide polymérisable comprend au moins un acrylate sélectionné parmi de l'acrylate, du (méth)acrylate de méthyl (ester méthylique d'acide méthacrylique, MMA), de l'ester éthylique d'acide méthacrylique (EMA), de l'ester éthylique d'acide acrylique d'éthyle, en particulier de l'ester éthylique d'acide méthacrylique.

6. Composition adhésive selon l'une des revendications 1 à 3,
**caractérisée en ce que**
l'hydrate de carbone polymérisable fonctionnalisé oléfiniquement, le dérivé à hydrate de carbone polymérisable fonctionnalisé oléfiniquement ou le mélange desquels comprend au moins un di- et polysaccharide fonctionnalisé oléfiniquement, un dérivé au di- et polysaccharide fonctionnalisé oléfiniquement, une cellulose fonctionnalisée oléfiniquement, un dérivé à cellulose fonctionnalisé oléfiniquement, un amidon fonctionnalisé oléfiniquement, un dérivé à amidon fonctionnalisé oléfiniquement, une chitine fonctionnalisée oléfiniquement et/ou un dérivé 'a la chitine fonctionnalisé oléfiniquement, en particulier des esters, éthers, carbamates et/ou amides desdites hydrates de carbone.

7. Composition adhésive selon l'une des revendications 1 à 6,
**caractérisée en ce que**
l'hydrate de carbone polymerisable fonctionnalisé oléfiniquement, le dérivé à hydrate de carbone fonctionnalisé oléfiniquement ou le mélange desquels comprend une cellulose fonctionnalisée oléfiniquement, un dérivé à cellulose fonctionnalisé oléfiniquement ou un mélange desquels.

8. Composition adhésive selon l'une des revendications 1 à 7,
**caractérisée en ce que**
l'hydrate de carbone polymerisable fonctionnalisé oléfiniquement, le dérivé à hydrate de carbone fonctionnalisé oléfiniquement ou le mélange desquels comprend, en tant qu'au moins un reste oléfinique, du reste alcényle, du reste alcène-aryle, du reste acyle insaturé, du reste acryloyle, du reste acryle, du reste acrylamide, du reste acryle de 2-alkyle, du reste acryloyle de 2-alkyle, le groupe alkyle comprenant 1 à 10 atomes C, du reste acrylamide de 2-alkyle, le groupe alkyle comprenant 1 à 10 atomes C, ou
au moins un reste acryle, un reste 2-acène-acryle, un reste alcényle, un reste alcène-aryle, un reste acyle insaturé, étant ponté par au moins un hétéroatome bifonctionnel sélectionné parmi des atomes O, N et S, en particulier au moins un reste acryle, un reste 2-alcène-acryle, un reste alcényle, un reste alcène-aryle, un reste acyle insaturé, étant ponté par -O-ou -NH- bifonctionnel.

9. Composition adhésive selon l'une des revendications 1 à 8,
**caractérisée en ce que**
l'hydrate de carbone polymerisable fonctionnalisé oléfiniquement ou le dérivé à hydrate de carbone fonctionnalisé oléfiniquement comprend de l'acétate-butyrate de cellulose fonctionnalisé oléfiniquement, de l'acétate-butyrate de cellulose d'(acryloyl-alkyle), de l'acétate-butyrate de cellulose d'(acrylamide-alkyle), chacun indépendamment ayant 1 à 10 atomes C dans le group alkyle bifonctionnel, en particulier de l'acétate-butyrate de cellulose d'(acryloyl-méthyle), de l'acétate-butyrate de cellulose d'(acryloyl-éthyle), de l'acétate-butyrate de cellulose d'(acrylamide-éthyle) et/ou de l'acétate-butyrate de cellulose d'(acrylamide-méthyle).

10. Composition adhésive selon l'une des revendications 1 à 9,
**caractérisée en ce que**
l'hydrate de carbone polymerisable fonctionnalisé oléfiniquement ou le dérivé à hydrate de carbone fonctionnalisé oléfiniquement est sélectionné parmi de l'acétate-butyrate de cellulose d'(acrylamide-méthyle) ou l'acétate-butyrate de cellulose d'(acrylamide-éthyle).

11. Composition adhésive selon l'une des revendications 1 à 10,
**caractérisée en ce que**
l'hydrate de carbone polymerisable fonctionnalisé oléfiniquement ou le dérivé à hydrate de carbone fonctionnalisé oléfiniquement a une moyenne en nombres de la distribution du poids moléculaire de Mn 1.000 à 50.000 g/mol, en particulier de 5,000 g/mol à 40,000 g/mol, de préférence de 10.000 g/mol (GPC) à Mn 30.000 g/mol (GPC), chacun déterminée par moyen de GPC.

12. Composition adhésive selon l'une des revendications 1 à 11, **caractérisée en ce que** la composition adhésive est une composition adhésive dentaire polymérisable à chaud ou autopolymérisable, comprenant
(i) 60 à 78 % en poids au moins un monomère liquide polymérisable, en particulier comprenant de l'ester méthylique d'acide acrylique de méthyle (MMA) et/ou de l'ester éthylique d'acide acrylique de méthyle (EMA) ou un mélange comprenant au moins un des deux monomères, l'ester éthylique de l'acide acrylique de méthyle (EMA) est préféré,
(ii) 0 à 5 % en poids au moins un initiateur de polymérisation, en particulier un peroxyde et facultativement un accélérateur de polymérisation, en particulier une amine tertiaire aromatique, et/ou un système initiateur pour la polymérisation, et
(iii) 22 à 40 % en poids au moins un hydrate de carbone polymérisable fonctionnalisé oléfiniquement, un dérivé à hydrate de carbone polymerisable fonctionnalisé oléfiniquement ou un mélange desquels, en particulier l'acétate-butyrate de cellulose d'acrylamide-méthyle et/ou l'acétate-butyrate de cellulose d'acrylamide-éthyle, la composition totale équivaut à 100 % en poids.

13. Composition adhésive selon l'une des revendications 1 à 12, **caractérisée en ce que** la composition a une viscosité de 50 à 5000 mPa·s (20 °C), en particulier la composition a une viscosité faible de 50 à 100 mPa·s, une viscosité moyenne de 300 à 600 mPa·s, de préférence environ 450 mPa·s avec +/- 25 mPa·s, ou une viscosité élevée de 1500 à 2000 mPa·s, dépendant à l'application.

14. Composition adhésive selon l'une des revendications 1 à 13, **caractérisée en ce que** la composition est une composition adhésive autopolymérisable à 2-composants, en particulier une composition adhésive dentaire autopolymérisable à 2-composants.

15. Kit comprenant une composition adhésive à 2-composants, en particulier selon l'une des revendications 3 à 14, comprenant
A) au moins un composant monomère liquide polymérisable,
B) au moins un hydrate de carbone fonctionnalisé oléfiniquement ou un dérive à hydrate de carbone fonctionnalisé oléfiniquement ou un mélange desquels,
**caractérisé en ce que**
la composition adhésive contient dans le composant (A) et/ou (B)
(i) au moins un initiateur de polymérisation et facultativement un accélérateur de polymérisation ou un système initiateur pour l'autopolymérisation.

16. Procédé pour coller des dents artificielles dans respectivement une cavité à recevoir au moins des parties d'une dent artificielle dans une base de prothèse dentaire, comprenant les étapes de :
a) utiliser une composition adhésive (2) polymérisable á chaud ou autopolymérisable de viscosité supérieure pour positionner et orienter respectivement une dent artificielle dans une cavité à recevoir une dent artificielle, et
b) utiliser une composition adhésive (1) photopolymérisable de viscosité inférieure pour remplir l'écart marginal formé entre la dent et la marge de cavité,
en, dans l'étape
a) (i) effectuer l'insertion de la composition adhésive polymerisable à chaud ou autopolymérisable selon l'une des revendications 1 à 16 dans la cavité respective, en particulier en une teneur de la composition adhésive qui ne s'échappe pas de la cavité après l'insertion et le pressage de la dent artificielle respective dans la cavité respective, (ii) fournir le côté basal de la dent artificielle respective avec la composition adhésive polymérisable à chaud ou autopolymérisable, et
- insérer la dent respective avec le côté basal dans la cavité respective de la base de prothèse dentaire, et
- facultativement positionner er orienter la dent dans la cavité respective, et
b) (i) facultativement remplir l'écart marginal formé entre la mare de cavité de la cavité respective et la dent respective insérée avec une composition adhésive photopolymérisable.

17. Utilisation d'une composition adhésive selon l'une des revendications 1 à 14 ou du kit selon la revendication 15, pour coller des plastiques, des plastiques chargés, des substrats minéraux, des substrats métalliques, des plastiques dentaires, des plastiques chargés dentaires, des substrats minéraux dentaires et/ou des substrats métalliques dentaires, des parts prothétiques dentaires, médicaux, chirurgicaux, telle que des bases de prothèse avec des dents artificielles, des couronnes, des piliers, des barres, des superstructures dentaires, des facettes dentaires, des implants, des composants techniques, des composants électroniques, des composants automobiles, des composants informatiques.
